# EUROPEAN PATENT APPLICATION

(11) **EP 4 645 242 A1**
(43) Date of publication of application: **05.11.2025**
(21) Application number: 23912545.3
(22) Date of filing: 06.11.2023
(51) Int. Cl.: G06T 19/20, G06T 7/11, G06V 20/56, G01S 17/894, G01S 17/86, G06V 10/25, G06T 7/70, G06T 17/05, G06T 5/50

(54) **ELECTRONIC DEVICE AND METHOD FOR IDENTIFYING GROUND IN TIME-SERIES POINT CLOUD FOR THREE-DIMENSIONAL SPACE**

(30) Priority: 28.12.2022 KR 20220187653; 18.09.2023 KR 20230124153
(71) Applicant: Seoul Robotics Co., Ltd., Seoul 06649 (KR)
(72) Inventor: PARK, Jae Il, Seoul 07039 (KR); TRUONG, Hong Minh, Seongnam-si Gyeonggi-do 13532 (KR); KANG, Sung Ju, Seoul 08792 (KR); KIM, Young Seong, 80636 München (DE); JOSSON, Thorsteinn Baldvin, Seoul 03902 (KR)
(74) Representative: Lewis Silkin LLP
(86) International application number: PCT/KR2023/017676
(87) International publication number: WO 2024/143866

(57) **Abstract**

An electronic device includes a communication circuit, an input device, at least one processor, and at least one memory. The at least one processor stores instructions, and the instructions are configured to obtain a time-series point cloud for a three-dimensional space from the sensing device, to generate a grid covering the three-dimensional space and having a plurality of cells, to select at least on cell having a ground among the plurality of the cells through the input device, to determine a height value of each of the at least one cell based on the point cloud, to determine a height value of each of remaining cells excluding the at least one cell among the plurality of the cells based on the height value of each of the at least one cell, and to identify the ground based on the height value of each of the plurality of the cells.

## Description

### BACKGROUND OF THE INVENTION

### TECHNICAL FIELD

Exemplary embodiments of the present invention relate to an electronic device and method for identifying ground from a time-series point cloud in three-dimensional space.

### DISCUSSION OF THE RELATED ART

Recently, technologies that detect three-dimensional space using 3D sensors and generate data about the three-dimensional space based on this are being used in various industrial technology fields. LiDAR (Light Detection And Ranging), one of the 3D sensors, is a sensor that obtains information about 3D space by emitting light to an object in 3D space and then receiving the reflected light. For example, the LiDAR sensor may detect the distance to objects in three-dimensional space and various physical properties, so it may be used in autonomous driving technology.

Since there is a physical limit to the sensing area that a single sensing device may sense, multiple sensing devices must be appropriately placed for wide spaces. Based on data received from the multiple sensing devices, information about a wide space may be obtained.

### SUMMARY

According to exemplary embodiments of the present invention, a technical solution is to identify the area corresponding to the ground in a point cloud. Specifically, the technical solution is to identify the area corresponding to the ground in the point cloud using a method of generating grid-based ground information.

In addition, according to exemplary embodiments of the present invention, a technical solution is to identify the ground corresponding to the static object area and to reduce errors and improve computational efficiency by excluding the static point cloud corresponding to the ground from the computation.

In addition, according to exemplary embodiments of the present invention, a technical solution is to accurately identify the ground from a 3D point cloud without a pre-mapping process.

According to one aspect of the present invention, an electronic device includes a communication circuit, an input device, at least one processor, and at least one memory. When the at least on memory is operated, the at least one processor stores instructions, and the instructions are configured to obtain a time-series point cloud for a three-dimensional space from the sensing device, to generate a grid covering the three-dimensional space and having a plurality of cells, to select at least on cell having a ground among the plurality of the cells through the input device, to determine a height value of each of the at least one cell based on the point cloud, to determine a height value of each of remaining cells excluding the at least one cell among the plurality of the cells based on the height value of each of the at least one cell, and to identify the ground based on the height value of each of the plurality of the cells.

In an exemplary embodiment, each of the plurality of the cells may be a hexahedral cell having a horizontal and vertical value of a predetermined length and the height value determined based on the point cloud or a user input.

In an exemplary embodiment, the instructions may be configured to cause the at least one processor to determine, for a first cell among the at least one cell, a point having a largest height value among a plurality of points included in the first cell, and to determine the height value of the identified point as the height value of the first cell.

In an exemplary embodiment, the instructions may be configured to cause at least one processor to receive, through the input device, a user input for selecting at least one point including the ground from among a plurality of points included in a second cell, for the second cell among the at least one cell, in response to receiving the user input, to identify a point having a largest height value among the at least one point, and to determine the height value of the identified point as the height value of the second cell.

In an exemplary embodiment, the instructions may be configured to cause at least one processor to receive, through the input device, a user input for entering the height value of a third cell among the at least one cell, and in response to receiving the user input, to determine the height value of the third cell.

In an exemplary embodiment, the instructions may be configured to cause at least one processor to determine the height value of each of remaining cells through interpolation based on the height value of each of the at least one cell.

In an exemplary embodiment, the instructions may be configured to cause at least one processor to determine an area identified as the ground among the point clouds as a static object area, and to exclude a static point cloud corresponding to the static object area from calculation.

In an exemplary embodiment, the electronic device may further include a display. Instructions may be configured to cause at least one processor to, in response to selecting the at least one cell, display the at least one cell in a particular color through the display.

In an exemplary embodiment, the communication circuit may be connected to a plurality of sensing devices. Instructions may be configured to cause at least one processor to acquire a plurality of time-series point clouds for the three-dimensional space from the plurality of the sensing devices, respectively, and to select one point cloud for identifying the ground from among the plurality of the point clouds through the input device.

According to another aspect of the present invention, a method for identifying ground from a time-series point cloud in a three-dimensional space of an electronic device, includes obtaining the time-series point cloud for the three-dimensional space from a sensing device, generating a grid covering the three-dimensional space and having a plurality of cells, selecting at least one cell having the ground among the plurality of the cells through an input device, determining a height value of each of the at least one cell based on the point cloud, determining a height value of each of remaining cells excluding the at least one cell among the plurality of the cells based on the height value of each of the at least one cell, and identifying the ground based on the height value of each of the plurality of the cells.

In an exemplary embodiment, each of the plurality of the cells may be a hexahedral cell having horizontal and vertical values of a predetermined length and a height value determined based on the point cloud or a user input.

In an exemplary embodiment, the determining the height value of each of the at least one cell may include checking, for a first cell among the at least one cell, a point having the largest height value among a plurality of points included in the first cell, and determining the height value of a checked point as the height value of the first cell.

In an exemplary embodiment, the determining the height value of each of the at least one cell may include receiving the user input for selecting at least one point including the ground among a plurality of points included in a second cell, for the at least one cell, through the input device, in response to receiving the user input, identifying a point having the largest height value among the at least one point, and determining the height value of the identified point as the height value of the second cell.

In an exemplary embodiment, the determining the height value of each of the at least one cell may include receiving, through the input device, the user input for inputting a height value of a third cell among the at least one cell, and determining the height value of the third cell in response to receiving the user input.

In an exemplary embodiment, the determining a height value of each of remaining cells excluding the at least one cell among the plurality of the cells, may include determining the height value of each of the remaining cells through interpolation based on the height value of each of the at least one cell.

In an exemplary embodiment, the method may further include determining an area identified as the ground among the point clouds as a static object area, and excluding a static point cloud corresponding to the static object area from calculation.

In an exemplary embodiment, the method may further include displaying the at least one cell in a particular color via a display, in response to selecting at least one cell.

In an exemplary embodiment, the method may further include acquiring a plurality of the time-series point clouds for the three-dimensional space from a plurality of sensing devices, and selecting one point cloud for identifying the ground from among the plurality of the point clouds.

According to some exemplary embodiments of the present invention, identifying the area corresponding to the ground in a point cloud is a technical solution. Specifically, the area corresponding to the ground in a point cloud can be identified by using a method of generating grid-based ground information.

In addition, by identifying the ground corresponding to the static object area and excluding the static point cloud corresponding to the ground from the calculation, errors may be reduced and computational efficiency may be improved.

In addition, the ground may be accurately identified from a 3D point cloud without a pre-mapping process.

### BRIEF DESCRIPTION OF THE DRAWINGS

FIG. 1 is a diagram illustrating a system according to an example embodiment of the present invention;
FIG. 2 is a block diagram illustrating an electronic device and a sensing device of the system;
FIG. 3 is a diagram illustrating a method for detecting a three-dimensional space using a plurality of sensing devices according to an example embodiment of the present invention;
FIG. 4 is a flowchart of an operation of the electronic device of FIG. 2;
FIG. 5A to FIG. 5F are screens of a program providing various information on the three-dimensional space; and
FIG. 6 is a flowchart of an operation of the electronic device of FIG. 2.

### DETAILED DESCRIPTION OF THE INVENTION

The embodiments of the present disclosure are exemplified for the purpose of explaining the technical idea of the present disclosure. The scope of rights according to the present disclosure is not limited to the embodiments presented below or the specific description of these embodiments.

All technical and scientific terms used in this disclosure, unless otherwise defined, have the meaning commonly understood by a person of ordinary skill in the art to which this disclosure belongs. All terms used in this disclosure have been selected for the purpose of more clearly explaining this disclosure and are not selected to limit the scope of rights under this disclosure.

The expressions "including," "comprising," "having," etc., used in this disclosure are to be understood as open-ended terms that imply the possibility of including other embodiments, unless otherwise stated in the phrase or sentence in which the expression is included.

The singular expressions described in this disclosure may include the plural meaning unless otherwise stated, and this also applies to the singular expressions described in the claims. The expressions "first", "second", etc. used in this disclosure are used to distinguish plural components from each other, and do not limit the order or importance of the components.

The term "part" as used in this disclosure means software or hardware components such as a field-programmable [0033] gate array (FPGA), an application specific integrated circuit (ASIC). However, the "part" is not limited to hardware and software. The "part" may be configured to be on an addressable storage medium, and may be configured to execute one or more processors. Thus, by way of example, the "part" includes components such as software components, object-oriented software components, class components, and task components, as well as processors, functions, properties, procedures, subroutines, segments of program code, drivers, firmware, microcode, circuitry, data, databases, data structures, tables, arrays, and variables. The functionality provided within a component and a "part" may be combined into a smaller number of components and "parts" or further separated into additional components and "parts."

The expression "based on" as used in this disclosure is used to describe one or more factors that influence the decision, act of judgment, or action described in the phrase or sentence containing the expression, and this expression does not exclude additional factors that influence the decision, act of judgment, or action.

In this disclosure, when a component is referred to as being "connected" or "connected" to another component, it should be understood that the component can be directly connected or connected to the other component, or can be connected or connected via a new other component.

Hereinafter, example embodiments of the present invention will be described with reference to the attached drawings. In the attached drawings, identical or corresponding components are given the same reference numerals. In addition, in the description of the embodiments below, redundant description of identical or corresponding components may be omitted. However, even if the description of a component is omitted, it is not intended that such a component is not included in any embodiment.

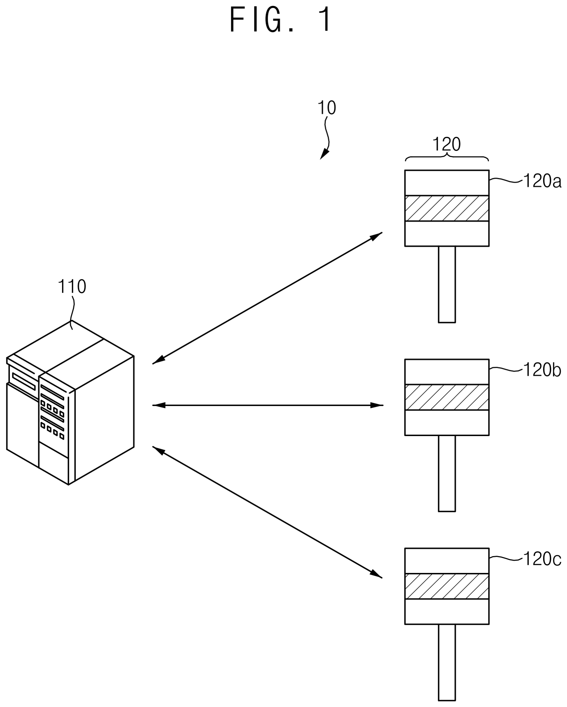

FIG. 1 is a diagram illustrating a system 10 according to an example embodiment of the present invention. The system 10 may include an electronic device 110 and a plurality of sensing devices 120. The electronic device 110 may be connected to the plurality of sensing devices 120 to transmit and receive various data. In this drawing, it is assumed that the plurality of sensing devices 120 are three (e.g., a first sensing device 120a, a second sensing device 120b, and a third sensing device 120c), but the number of the plurality of sensing devices 120 is not limited thereto.

The sensing device 120 according to various embodiments may be a device capable of obtaining a point cloud as spatial information for a three-dimensional space. The sensing device 120 may obtain a point cloud for a three-dimensional space by emitting light into a three-dimensional space and receiving light reflected by an object. The sensing device 120 may include at least one sensor. The point cloud may mean a set cloud of multiple points spread over a three-dimensional space. The point cloud may also be called, for example, a set of points, a point cloud, or point cloud data. Unlike a two-dimensional image, the point cloud is data capable of three-dimensional modeling because it includes depth (z-axis) information.

The sensing device 120 according to various embodiments may obtain a time-series point cloud for the three-dimensional space. The sensing device 120 may obtain the point cloud for the three-dimensional space by time or at a predetermined time interval (e.g., 0.1 s), and may obtain the time-series point cloud accordingly.

The sensing device 120 according to various embodiments may be installed in a place where it may detect the three-dimensional space, either indoors or outdoors. In order to monitor a wide three-dimensional space, the plurality of sensing devices 120 may be installed considering a detection area according to a range that a sensor included in the sensing device may detect. For example, the plurality of sensing devices 120 may be installed at a certain interval from each other. For example, each of the plurality of sensing devices 120 may be distributed and placed at a location where it may detect the three-dimensional space from different directions. For example, each of the plurality of sensing devices 120 may be distributed and placed at a location where it may detect an area of the three-dimensional space.

The sensing device 120 is a 3D sensor that detects a 3D space and may include a LiDAR (Light Detection And Ranging) sensor. The sensing device including the LiDAR sensor may obtain a volumetric point cloud for the 3D space. The LiDAR sensor may detect the shape, size, and position of objects included in the 3D space. A multi-channel LiDAR sensor that may collect information about the 3D space is suitable for a field that may utilize the approximate shape, size, and volume of an object.

The sensing device 120 may further include various types of sensors, such as, for example, a radar sensor, an infrared sensor, and a camera (image sensor). The sensing device 120 may include multiple sensors of the same type, or may use a combination of different types of sensors, considering the types of sensors it includes. The types of sensors described above are exemplary and are not limited thereto.

The electronic device 110 according to various embodiments may be a server device that operates a service providing three-dimensional information about a three-dimensional space. The electronic device 110 may also be implemented with cloud computing technology. The electronic device 110 may be connected to the plurality of sensing devices 120 to obtain the point cloud about the three-dimensional space from the plurality of sensing devices 120. The electronic device 110 may provide a customer with three-dimensional information about the three-dimensional space by using the point cloud obtained from the plurality of sensing devices 120. The customer may use the corresponding service by using the customer's terminal device (not shown). For example, a customer may install multiple sensing devices 120 in a place where they may detect a three-dimensional space that they want to monitor. The multiple sensing devices 120 may transmit the point cloud for the three-dimensional space to the electronic device 110. The electronic device 110 may model three-dimensional information for the three-dimensional space using the point cloud acquired from the multiple sensing devices 120. The electronic device 110 may transmit three-dimensional information for the three-dimensional space to the customer's terminal device. The customer may receive various services provided by the electronic device 110 through the customer's terminal device.

If the 3D space consists of a flat ground, there is no problem, but if the 3D space with an uneven ground is assumed to be a flat ground, objects located in the 3D space may be mistakenly recognized as existing under the ground or as existing floating above the ground. Therefore, it is important to accurately identify the ground in the point cloud.

In order to accurately identify the ground from the point cloud, generally, based on 3D map information, the point cloud may be mapped to 3D map information. For example, by obtaining HD map information for the 3D space in advance (e.g., satellite information for 3D space) and mapping each point cloud to the corresponding map information, the area corresponding to the ground may be accurately identified. In this case, since the 3D map information must be used to identify the ground, a lot of computational resources may be required for the mapping process. In addition, if the 3D map information is used, the time required to process a lot of computations may increase.

This disclosure relates to a technique for identifying the ground surface from the three-dimensional point cloud without a pre-mapping process. A specific identification method will be described later.

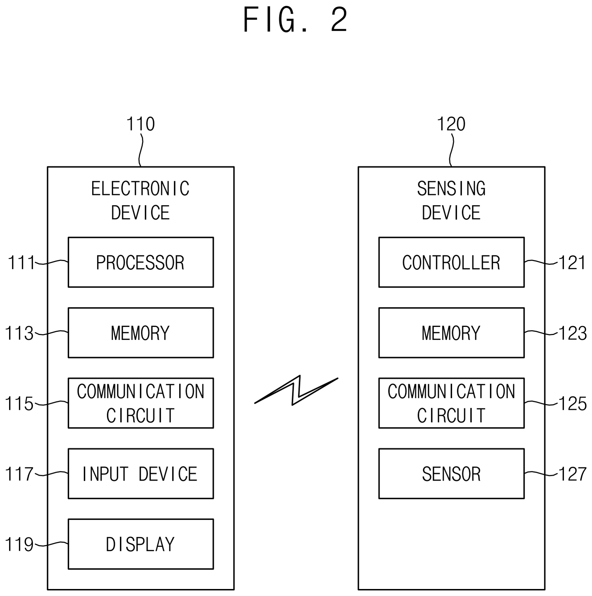

FIG. 2 is a block diagram illustrating an electronic device and a sensing device of the system.

Referring to FIG. 2, the electronic device 110 according to various embodiments may include at least one processor 111, at least one memory 113, a communication circuit 115, an input device 117, and a display 119. Some of the components of the illustrated electronic device 110 may be omitted or replaced. Additionally or alternatively, some of the components may be implemented by integration, or may be implemented as a single or multiple entities. The expression "processor 111" may mean a set of one or more processors 111, unless explicitly stated otherwise in the context. The expression "memory 113" may mean a set of one or more memories 113, unless explicitly stated otherwise in the context. At least some components within the electronic device 110 may be connected to each other via a bus, a general purpose input/output (GPIO), a serial peripheral interface (SPI), or a mobile industry processor interface (MIPI), and may exchange data and/or signals.

The processor 111 of the electronic device 110 according to various embodiments may perform calculations or data processing related to control and/or communication of each component of the electronic device 110. The processor 111 may be operatively connected to, for example, components of the electronic device 110. The processor 111 may store commands or data received from other components of the electronic device 110 in the memory 113 of the electronic device 110, load the commands or data stored in the memory 113, process them, and store the resulting data back in the memory 113. The memory 113 may store instructions for the operation of the processor 111.

The memory 113 of the electronic device 110 according to various embodiments may store various information. The memory 113 may store basic information about the plurality of sensing devices 120. The memory 113 may store a plurality of point clouds obtained from the plurality of sensing devices 120.

The communication circuit 115 of the electronic device 110 according to various embodiments may establish a wired or wireless communication channel with an external device (e.g., the plurality of sensing devices 120) and transmit and receive various data with the external device. According to one embodiment, the communication circuit 115 may include at least one port for connecting to the external device with a wired cable in order to communicate with the external device by wire. In the above case, the communication circuit 115 may perform communication with the external device connected by wire through at least one port. According to one embodiment, the communication circuit 115 may include a cellular communication module and be configured to be connected to a cellular network (e.g., 3G, LTE, 5G, Wibro or Wimax). According to various embodiments, the communication circuit 115 may include a short-range communication module and may transmit and receive data with the external device using short-range communication (e.g., Wi-Fi, Bluetooth, Bluetooth Low Energy (BLE), UWB), but is not limited thereto.

The input device 117 of the electronic device 110 according to various embodiments may receive a command or data to be used in a component (e.g., the processor 111) of the electronic device 110 from an external source (e.g., a user) of the electronic device 110. The input device 117 may include, for example, a mouse, a microphone, or a keyboard.

The display 119 of the electronic device 110 according to various embodiments may display various screens based on the control of the processor 111. The display 119 may be, for example, a monitor. The display 119 may be implemented in various ways, such as, for example, an LCD (Liquid Crystal Display), an OLED (Organic Light Emitting Diodes) display, an AM-OLED (Active-Matrix Organic Light-Emitting Diode), and a PDP (Plasma Display Panel). According to one embodiment, the display 119 may be implemented in the form of a touch sensor panel (TSP) that may recognize contact or proximity (for example, hovering) of various external objects.

The sensing device 120 according to various embodiments may include a controller 121, a memory 123, a communication circuit 125, and at least one sensor 127. Some of the configurations of the illustrated sensing device 120 may be omitted or replaced. Additionally or alternatively, some of the components may be implemented in an integrated manner or implemented as a single or multiple entities. The expression "sensor 127" may mean a set of one or more sensors 127, unless explicitly expressed otherwise in the context.

The controller 121 of the sensing device 120 according to various embodiments may perform operations or data processing regarding control and/or communication of each component of the sensing device 120. The controller 121 may be operatively connected to, for example, components of the sensing device 120. The controller 121 may store commands or data received from other components of the sensing device 120 in the memory 123 of the sensing device 120, load the commands or data stored in the memory 123, process them, and store the resulting data back in the memory 123. The memory 123 may store instructions for the operation of the sensing device 120. The controller 121 of the sensing device 120 may execute a program installed in the sensing device 120. The controller 121 may control a processing module that executes a program that detects three-dimensional space.

The sensor 127 of the sensing device 120 according to various embodiments may be the sensor 127 for detecting the three-dimensional space. The sensor 127 may include a light emitting unit that emits light in a three-dimensional space and a light receiving unit that receives light reflected from an object, and may further include a dedicated controller 121 that obtains the point cloud for the three-dimensional space based on the intensity of light received by the light receiving unit. The sensor 127 may obtain the time-series (or time-dependent) point cloud for the three-dimensional space in order to track an object located in the three-dimensional space within the detection area. The sensor 127 may be a Lidar sensor, and may obtain data for a specific range of space, including a three-dimensional Lidar sensor. The sensor 127 may further include various types of sensors, such as a radar sensor, an infrared sensor, an ultrasonic sensor, and a camera, depending on the environment.

The communication circuit 125 of the sensing device 120 according to various embodiments may establish a wired or wireless communication channel with an external device (e.g., the electronic device 110) and transmit and receive various data with the external device. According to one embodiment, the communication circuit 125 may include at least one port for connecting to the external device with a wired cable in order to communicate with the external device by wire. In the above case, the communication circuit 125 may perform communication with the external device connected by wire through at least one port. According to one embodiment, the communication circuit 125 may include a cellular communication module and may be configured to be connected to a cellular network (e.g., 3G, LTE, 5G, Wibro, or Wimax). According to various embodiments, the communication circuit 125 may include a short-range communication module to transmit and receive data with an external device using short-range communication (e.g., Wi-Fi, Bluetooth, Bluetooth Low Energy (BLE), UWB), but is not limited thereto.

The sensor 127 of the sensing device 120 according to various embodiments may further include a position sensor (e.g., a GPS sensor) in addition to the above-described Lidar sensor. In addition, the sensing device 120 may further include components for improving sensing performance depending on the installation environment of the sensing device 120. The controller 121 of the sensing device 120 according to various embodiments may operate the sensor 127 by executing one or more instructions stored in the memory 123, thereby obtaining the point cloud for the three-dimensional space, and transmitting the point cloud for the three-dimensional space to the electronic device 110 through the communication circuit 125. The sensing device 120 may transmit information (e.g., ID information) that may identify the sensing device 120 together with the point cloud for the three-dimensional space.

The processor 111 of the electronic device 110 according to various embodiments can generate three-dimensional information about the three-dimensional space by three-dimensionally modeling the structure of the three-dimensional space based on the point cloud received from a plurality of sensing devices 120. The processor 111 may perform a series of operations of detecting an object in the three-dimensional space and monitoring the three-dimensional space based on the point cloud for the three-dimensional space. The electronic device 110 may receive the point cloud for the three-dimensional space from the sensing device 120 and accurately identify the ground from the point cloud.

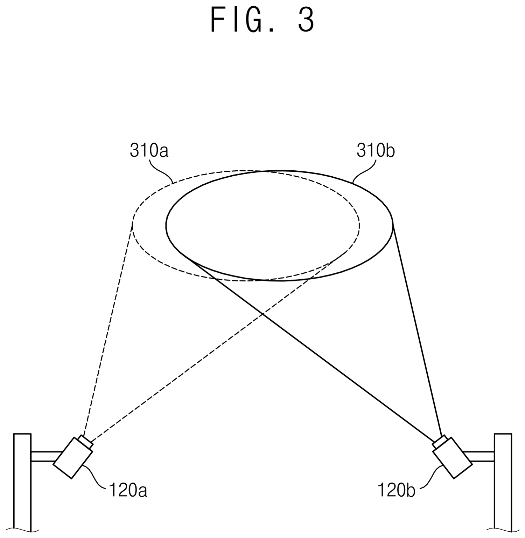

FIG. 3 is a diagram illustrating a method for detecting a three-dimensional space using a plurality of sensing devices according to an example embodiment of the present invention.

Referring to FIG. 3, the plurality of sensing devices 120 according to various embodiments may be arranged at a predetermined distance apart from each other in order to detect the three-dimensional space. In this drawing, it is assumed that there are two sensing devices 120, but the number of the sensing devices 120 is not limited thereto. The first sensing device 120a may obtain a first point cloud for the three-dimensional space within a first sensing area 310a, and the second sensing device 120b may obtain a second point cloud for the three-dimensional space within a second sensing area 310b. The first sensing device 120a may transmit the obtained first point cloud to the electronic device 110, and the second sensing device 120b may transmit the obtained second point cloud to the electronic device 110. The sensing device 120 may have a predetermined field of view and detection limit distance depending on the type of sensor, and accordingly, a sensing area capable of detecting an object in a three-dimensional space may be determined.

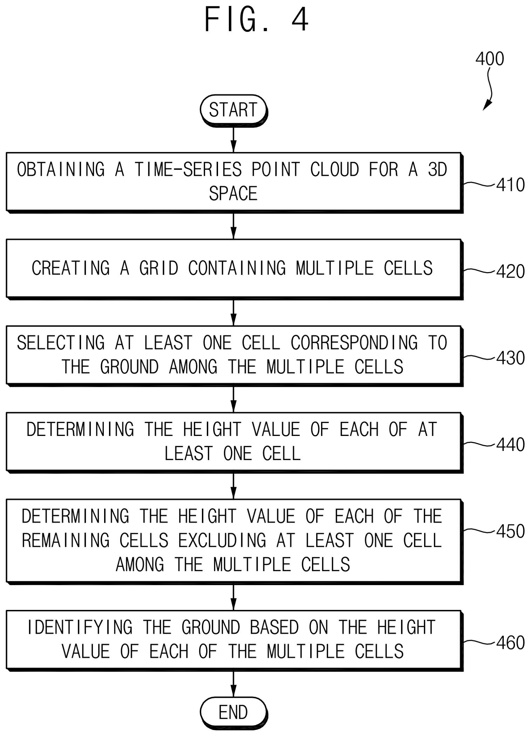

FIG. 4 is a flowchart of an operation of the electronic device of FIG. 2.

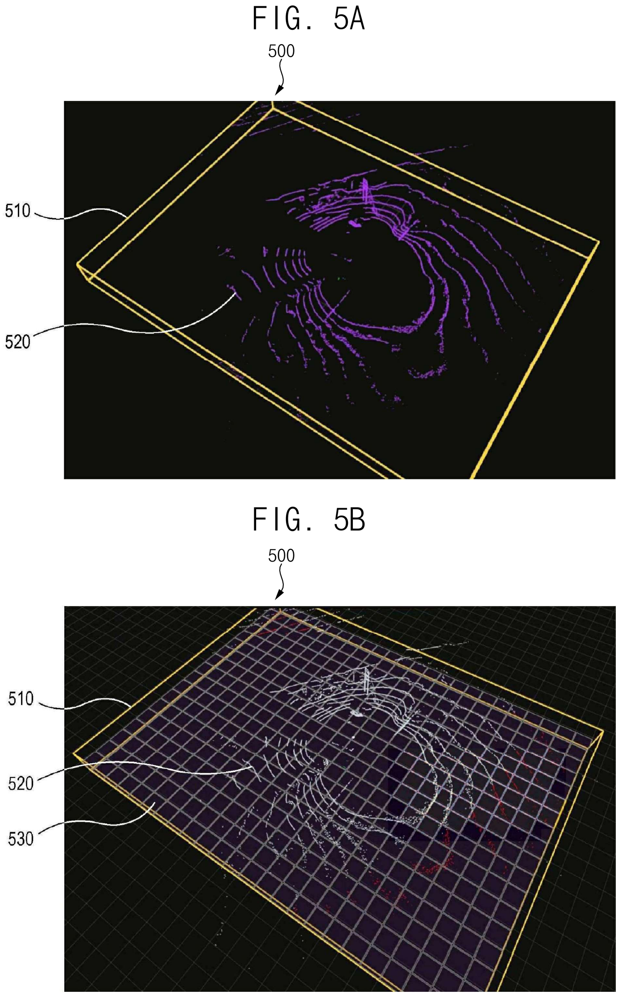

Referring to the operation flow diagram 400, the processor 111 of the electronic device 110 according to various embodiments may obtain the time-series point cloud for the three-dimensional space from the sensing device 120 in the operation 410. The processor 111 may receive a time-series point cloud for a three-dimensional space from the sensing device 120 through the communication circuit 115. The sensing device 120 may obtain the time-series (time-based) point cloud for the three-dimensional space by continuously sensing the three-dimensional space using the sensor. The sensing device 120 may transmit the time-series point cloud for the three-dimensional space to the electronic device 110, and the electronic device 110 may obtain the time-series point cloud for the three-dimensional space from the sensing device 120. FIG. 5A is a screen 500 of a program that provides various information about the three-dimensional space 510. The three-dimensional space 510 may be a space set as an area of interest. The time-series point cloud 520 for the three-dimensional space 510 may be displayed on the screen 500.

According to one embodiment, the processor 111 may obtain multiple point clouds in the time series for the three-dimensional space from multiple sensing devices 120. In this case, the processor may select one point cloud to identify the ground among the multiple clouds through the input device 117.

The processor 111 according to various embodiments may, in the operation 420, cover the three-dimensional space and generate a grid including a plurality of cells. The processor 111 may divide the three-dimensional space set as a region of interest into the grid including the plurality of cells. FIG. 5B is a screen 500 of a program that provides various information on the three-dimensional space 510. Specifically, FIG. 5B is a drawing illustrating a screen in which the grid including the plurality of cells 530 covering the three-dimensional space 510 is generated. Referring to FIG. 5B, the grid including the plurality of cells 530 that may cover the three-dimensional space 510 is generated. Each of the plurality of cells may be a hexahedron having a horizontal value (e.g., x-axis length) and a vertical value (e.g., y-axis length) of a predetermined length, and a height value (e.g., z-axis length) determined based on the point cloud or user input. That is, each of the multiple cells has a predetermined length for the horizontal and vertical values, and the height value is determined by the point cloud or user input. Each of the multiple cells is represented by the height value that the cell has. The height value described above is used as information for identifying the ground later.

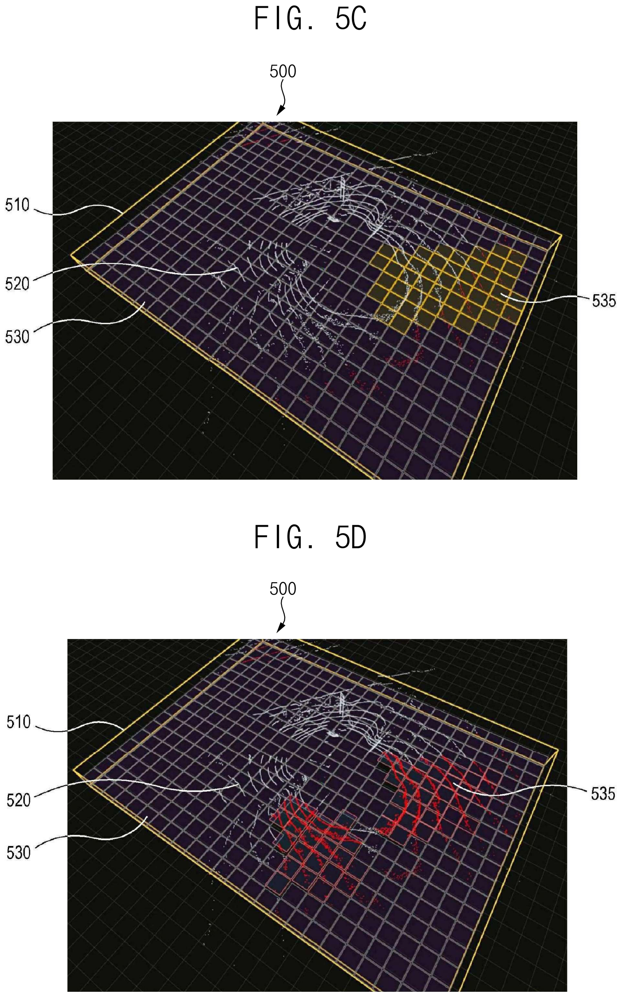

The processor 111 according to various embodiments may, in the operation 430, select at least one cell corresponding to the ground among the plurality of cells through the input device 117. For example, the user may select at least one cell corresponding to the ground among the plurality of cells by clicking or dragging the mouse. That is, the user may select at least one cell that the user thinks corresponds to the ground. FIG. 5C is a screen 500 of a program that provides various information about the three-dimensional space 510. Specifically, FIG. 5C is a drawing showing a screen in which at least one cell 535 among the plurality of cells 530 is selected. The user may select at least one cell 535 corresponding to the ground among the plurality of cells 530 through the input device 117. In one embodiment, the processor may, in response to selecting at least one cell 535, display the selected at least one cell 535 in a specific color via the display 119. That is, the processor 111 may display the selected at least one cell in a specific color so that it may be distinguished from other cells.

The processor 111 according to various embodiments may determine the height value of each of the at least one cell 535 based on the point cloud at operation 440. For example, the processor 111 may identify a point having the largest height value among a plurality of points included in the first cell among at least one cell 535, and determine the height value of the identified point as the height value of the first cell. For example, the processor 111 may receive a user input for selecting at least one point corresponding to the ground among the plurality of points included in the second cell among at least one cell 535 through the input device 117, and in response to receiving the user input, identify the point having the largest height value among the at least one point, and determine the height value of the identified point as the height value of the second cell. For example, the processor 111 may receive a user input for entering a height value of a third cell among at least one cell 535 through the input device 117, and in response to receiving the user input, determine the height value of the third cell.

FIG. 5D is a screen 500 of a program that provides various information about the three-dimensional space 510, and specifically, is a drawing showing a state in which the height value of each of at least one selected cell 535 is determined. Through one of the above-described methods, the processor 111 may determine the height value of each of at least one cell 535.

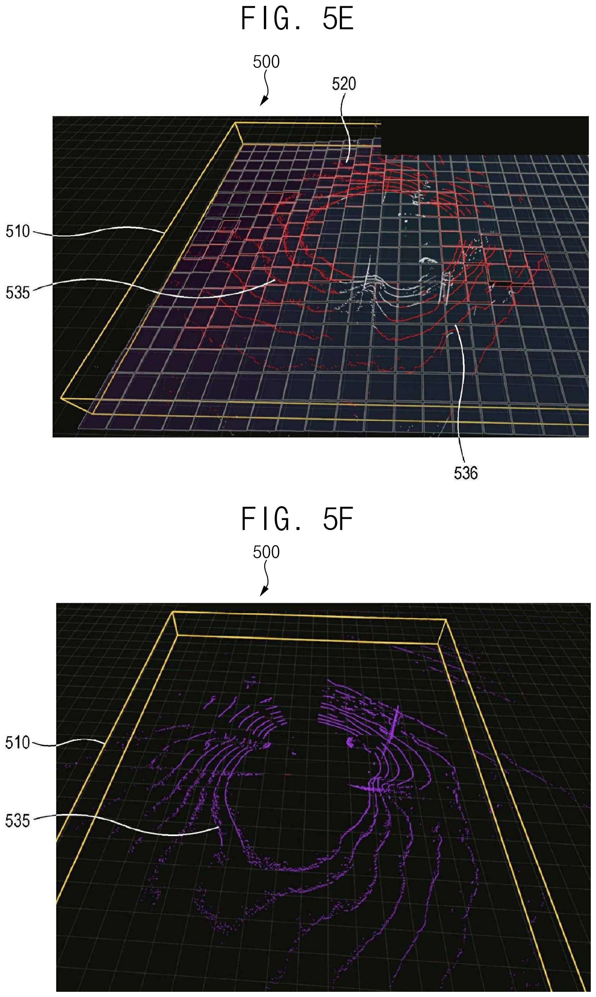

Returning to FIG. 4, the processor 111 according to various embodiments may, in the operation 450, determine the height value of each of the remaining cells excluding the at least one cell among the plurality of cells based on the height value of each of the at least one cell. The processor 111 may determine the height value of each of the remaining cells through interpolation based on the height value of each of the at least one cell. That is, the processor 111 may estimate arbitrary height values of cells adjacent to the at least one cell whose height value has been determined using interpolation. The processor 111 may determine (estimate) the height values of the remaining cells whose height values have not been determined so that the outline of the ground may be smoothly generated. FIG. 5E is a drawing showing a screen 500 of a program that provides various information on the three-dimensional space 510, specifically, a state in which the height values of not only the selected at least one cell 535 but also the remaining unselected cells 536 have been determined. The processor 111 may determine the height values of all of the plurality of cells by estimating arbitrary height values of cells adjacent to at least one cell 535 whose height value has been determined using an interpolation method.

The processor 111 according to various embodiments may identify the ground based on the height values of each of the plurality of cells in the operation 460. The processor 111 may identify the height values of each cell as the height of the ground. FIG. 5F is a screen 500 of a program that provides various information on the three-dimensional space 510, and specifically, is a drawing showing the point cloud 550 included in an area identified as the ground among the point clouds. Based on the height values of each of the plurality of cells, the processor 111 may accurately identify the ground. Thereafter, the processor 111 may determine the area identified as the ground among the point clouds as a static object area. The processor 111 may exclude a static point cloud corresponding to the static object area from the calculation. Through this, the processor 111 may clearly distinguish between a static object area such as the ground and a dynamic object area such as a person, and monitor the dynamic object area more efficiently.

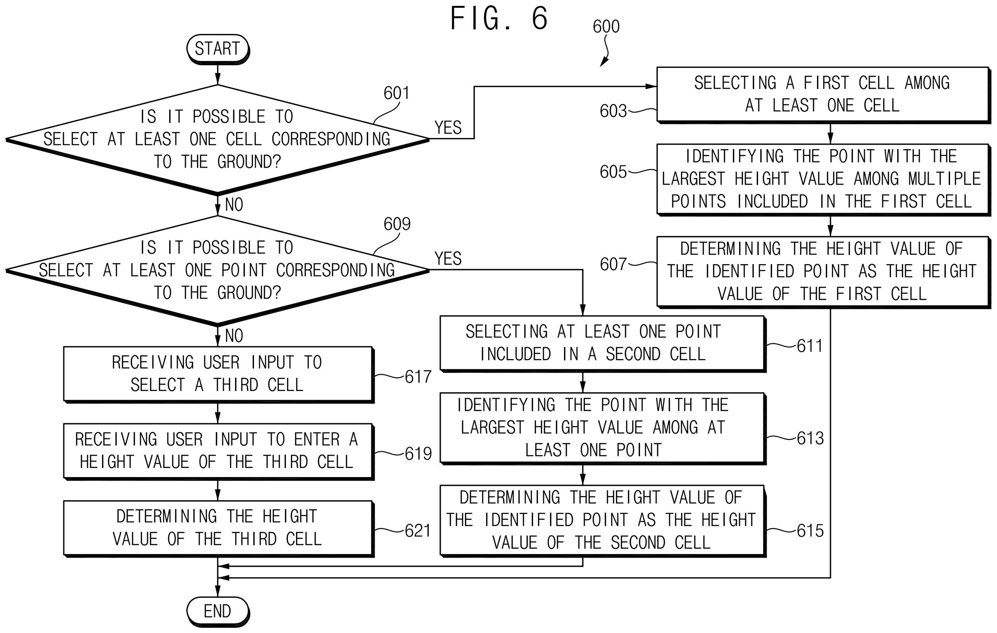

FIG. 6 is a flowchart of an operation of the electronic device of FIG. 2. Specifically, FIG. 6 is a drawing of a specific method for the operation 440 of FIG. 4.

Referring to the operation 600, the processor 111 of the electronic device 110 according to various embodiments may, in the operation 610, check whether the first cell corresponding to the ground among at least one cell is selectable. The processor 111 may check whether the ground information reference cell corresponding to the ground among at least one cell including the ground is selectable. For example, if the user determines that the first cell (ground information reference cell) corresponding to the ground exists, the user may click (select) an icon for selecting the first cell. In this case, the processor 111 may recognize that the first cell corresponding to the ground is selectable. If the icon for selecting the first cell is not selected, the processor 111 may recognize that the first cell is not selectable.

If the first cell can be selected, the processor 111 may select the first cell among at least one cell by branching to the operation 603 (the operation 601-Yes). The processor 111 may select the first cell based on the user input for selecting the first cell. The processor 111 according to various embodiments may, in the operation 605, identify the point having the largest height value among the plurality of points included in the first cell. The processor 111 may identify the plurality of points included in the first cell, and identify the point having the largest height value among them. The processor 111 according to various embodiments may, in the operation 607, determine the height value of the identified point as the height value of the first cell. That is, the processor 111 may determine the height value of the point having the largest height value among the plurality of points included in the first cell as the height value of the first cell.

If the first cell cannot be selected, the processor 111 may check whether at least one point corresponding to the ground may be selected by branching to the operation 609 (the operation 601-No). The processor 111 may check whether at least one point corresponding to the ground may be selected among the points included in the point cloud. For example, if the user determines that at least one point corresponding to the ground exists, the user may click (select) an icon for selecting the at least one point. In this case, the processor 111 may recognize that at least one point corresponding to the ground is selectable. If the icon for selecting at least one point is not selected, the processor 111 may recognize that at least one point may not be selected.

If at least one point corresponding to the ground may be selected, the processor 111 may select at least one point included in the second cell by branching to the operation 611 (the operation 609-Yes). The processor 111 according to various embodiments may, in the operation 613, identify the point having the largest height value among the at least one point. The processor 111 according to various embodiments may, in the operation 615, determine the height value of the identified point as the height value of the second cell. That is, the processor 111 may determine the height value of the point having the largest height value among at least one point selected by the user among the plurality of points included in the second cell as the height value of the second cell.

If at least one point corresponding to the ground may not be selected, the processor 111 may branch to the operation 617 (the operation 609-No), and the processor 111 may receive the user input for selecting a third cell. For example, the user may select the third cell among the plurality of cells to directly input a height value of the third cell through the input device. The processor 111 according to various embodiments may receive the user input for inputting a height value of the third cell at the operation 619. The processor 111 according to various embodiments may determine a height value of the third cell at the operation 621. The processor 111 may determine the height value input by the user as the height value of the third cell.

Using the above-described method, a height value may be determined for each of at least one cell. In addition, the processor 111 may accurately identify the ground in the point cloud. Furthermore, since the ground may be identified in the point cloud without a pre-mapping process, waste of computational resources and computational time may be reduced.

Although the process steps, method steps, algorithms, etc. are described in a sequential order in the flow charts illustrated in the drawings, such processes, methods, and algorithms may be configured to operate in any suitable order. In other words, the steps of the processes, methods, and algorithms described in various embodiments of the present disclosure need not be performed in the order described in the present disclosure. Furthermore, even if some steps are described as being performed asynchronously, in other embodiments, such some steps may be performed concurrently. Furthermore, the illustration of a process by depiction in the drawings does not imply that the illustrated process excludes other changes and modifications thereto, nor does it imply that any of the illustrated process or its steps is essential to one or more of the various embodiments of the present disclosure, nor does it imply that the illustrated process is preferred.

Although the technical features of the present disclosure have been described by the above-described embodiments and examples illustrated in the attached drawings, it should be understood that various substitutions, modifications, and changes can be made without departing from the technical scope of the present disclosure as understood by those skilled in the art to which the present disclosure pertains. In addition, such substitutions, modifications, and changes should be considered to fall within the scope of the appended claims. Although the above-described method has been described through specific embodiments, the method can also be implemented as computer-readable code on a computer-readable recording medium. A computer-readable recording medium includes all kinds of recording devices that store data that can be read by a computer system. Examples of computer-readable recording media can include ROMs, RAMs, CD-ROMs, magnetic tapes, floppy disks, optical data storage devices, etc. In addition, the computer-readable recording medium can be distributed over network-connected computer systems, so that the computer-readable code can be stored and executed in a distributed manner. And, functional programs, codes and code segments for implementing the above embodiments can be easily inferred by programmers in the technical field to which the present disclosure belongs.

## Claims

1. An electronic device comprising:
a communication circuit configured to communicate with a sensing device;
an input device;
at least one processor; and
at least one memory,
wherein when the at least on memory is operated, the at least one processor stores instructions, wherein the instructions are configured to:
obtain a time-series point cloud for a three-dimensional space from the sensing device,
generate a grid covering the three-dimensional space and having a plurality of cells,
select at least on cell having a ground among the plurality of the cells through the input device,
determine a height value of each of the at least one cell based on the point cloud,
determine a height value of each of remaining cells excluding the at least one cell among the plurality of the cells based on the height value of each of the at least one cell, and
identify the ground based on the height value of each of the plurality of the cells.

2. The electronic device of claim 1, wherein each of the plurality of the cells is a hexahedral cell having a horizontal and vertical value of a predetermined length and the height value determined based on the point cloud or a user input.

3. The electronic device of claim 2, wherein the instructions are configured to cause the at least one processor to,
determine, for a first cell among the at least one cell, a point having a largest height value among a plurality of points included in the first cell, and
determine the height value of the identified point as the height value of the first cell.

4. The electronic device of claim 2, wherein the instructions are configured to cause at least one processor to,
receive, through the input device, a user input for selecting at least one point including the ground from among a plurality of points included in a second cell, for the second cell among the at least one cell,
in response to receiving the user input, identify a point having a largest height value among the at least one point, and
determine the height value of the identified point as the height value of the second cell.

5. The electronic device of claim 2, wherein the instructions are configured to cause at least one processor to,
receive, through the input device, a user input for entering the height value of a third cell among the at least one cell, and
in response to receiving the user input, determine the height value of the third cell.

6. The electronic device of claim 1, wherein the instructions are configured to cause at least one processor to determine the height value of each of remaining cells through interpolation based on the height value of each of the at least one cell.

7. The electronic device of claim 1, wherein the instructions are configured to cause at least one processor to
determine an area identified as the ground among the point clouds as a static object area, and
exclude a static point cloud corresponding to the static object area from calculation.

8. The electronic device of claim 1, further comprising a display,
wherein instructions are configured to cause at least one processor to, in response to selecting the at least one cell, display the at least one cell in a particular color through the display.

9. The electronic device of claim 1, wherein the communication circuit is connected to a plurality of sensing devices,
wherein instructions are configured to cause at least one processor to,
acquire a plurality of time-series point clouds for the three-dimensional space from the plurality of the sensing devices, respectively, and
select one point cloud for identifying the ground from among the plurality of the point clouds through the input device.

10. A method for identifying ground from a time-series point cloud in a three-dimensional space of an electronic device, the method comprising:
obtaining the time-series point cloud for the three-dimensional space from a sensing device;
generating a grid covering the three-dimensional space and having a plurality of cells;
selecting at least one cell having the ground among the plurality of the cells through an input device;
determining a height value of each of the at least one cell based on the point cloud;
determining a height value of each of remaining cells excluding the at least one cell among the plurality of the cells based on the height value of each of the at least one cell; and
identifying the ground based on the height value of each of the plurality of the cells.

11. The method of claim 10, wherein each of the plurality of the cells is a hexahedral cell having horizontal and vertical values of a predetermined length and a height value determined based on the point cloud or a user input.

12. The method of claim 11, wherein the determining the height value of each of the at least one cell comprises:
checking, for a first cell among the at least one cell, a point having the largest height value among a plurality of points included in the first cell; and
determining the height value of a checked point as the height value of the first cell.

13. The method of claim 11, wherein the determining the height value of each of the at least one cell comprises:
receiving the user input for selecting at least one point including the ground among a plurality of points included in a second cell, for the at least one cell, through the input device;
in response to receiving the user input, identifying a point having the largest height value among the at least one point; and
determining the height value of the identified point as the height value of the second cell.

14. The method of claim 11, wherein the determining the height value of each of the at least one cell comprises:
receiving, through the input device, the user input for inputting a height value of a third cell among the at least one cell; and
determining the height value of the third cell in response to receiving the user input.

15. The method of claim 10, wherein the determining a height value of each of remaining cells excluding the at least one cell among the plurality of the cells, comprises:
determining the height value of each of the remaining cells through interpolation based on the height value of each of the at least one cell.

16. The method of claim 10, further comprising:
determining an area identified as the ground among the point clouds as a static object area; and
excluding a static point cloud corresponding to the static object area from calculation.

17. The method of claim 10, further comprising:
displaying the at least one cell in a particular color via a display, in response to selecting at least one cell.

18. The method of claim 10, further comprising:
acquiring a plurality of the time-series point clouds for the three-dimensional space from a plurality of sensing devices; and
selecting one point cloud for identifying the ground from among the plurality of the point clouds.
